(19)

Europäisches
Patentamt
European
Patent Office
Office européen
des brevets

(11) **EP 4 397 709 A1**

(12) **EUROPEAN PATENT APPLICATION**
published in accordance with Art. 153(4) EPC

(43) Date of publication:
**10.07.2024 Bulletin 2024/28**

(21) Application number: 23869301.4

(22) Date of filing: **21.08.2023**

(51) International Patent Classification (IPC):
**C08L 51/04** (2006.01)    **C08L 33/06** (2006.01)
**C08K 5/3475** (2006.01)    **C08L 25/08** (2006.01)
**C08K 5/3435** (2006.01)

(52) Cooperative Patent Classification (CPC):
**C08K 5/3435; C08K 5/3475; C08L 25/08;**
**C08L 33/06; C08L 51/04**

(86) International application number:
**PCT/KR2023/012324**

(87) International publication number:
**WO 2024/085404 (25.04.2024 Gazette 2024/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.10.2022   KR 20220135356**
              **18.08.2023   KR 20230108416**

(71) Applicant: **LG Chem, Ltd.**
**Seoul 07336 (KR)**

(72) Inventors:
• **PARK, Chun Ho**
  **Daejeon 34122 (KR)**
• **KIM, Tae Hoon**
  **Daejeon 34122 (KR)**
• **CHO, Yun Kyoung**
  **Daejeon 34122 (KR)**
• **AN, Yong Hee**
  **Daejeon 34122 (KR)**
• **KIM, Ho Hoon**
  **Daejeon 34122 (KR)**
• **JANG, Jeongmin**
  **Daejeon 34122 (KR)**
• **YOON, Hyeok Jun**
  **Daejeon 34122 (KR)**

(74) Representative: **Plasseraud IP**
**66, rue de la Chaussée d'Antin**
**75440 Paris Cedex 09 (FR)**

(54) **THERMOPLASTIC RESIN COMPOSITION, METHOD FOR PRODUCING SAME, AND MOLDED ARTICLE INCLUDING SAME**

(57)    The present invention relates to a thermoplastic resin composition, a method of preparing the same, and a molded article including the same. More particularly, the present invention relates to a thermoplastic resin composition including 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein the graft copolymer (a-1) has an alkyl acrylate coverage (X) value of 65 % by weight or more, a method of preparing the thermoplastic resin composition, and a molded article including the thermoplastic resin composition.

According to the present invention, the present invention has an effect of providing a thermoplastic resin

EP 4 397 709 A1

**(Cont. next page)**

composition having excellent mechanical properties, transparency, and weather resistance, having little change over time and excellent color stability due to excellent weather resistance, and being capable of providing an aesthetically pleasing appearance, a method of preparing the thermoplastic resin composition, and a molded article including the thermoplastic resin composition.

**Description**

[Technical Field]

[Cross-Reference to Related Applications]

This application claims priority to Korean Patent Application No. 10-2022-0135356, filed on October 20, 2022, and Korean Patent Application No. 10-2023-0108416, re-filed on August 18, 2023, based on the priority of the above patent, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition having excellent impact resistance, transparency, and weather resistance, having little change over time and excellent color stability due to excellent weather resistance, being capable of providing an aesthetically pleasing appearance, and being applicable to injection molding, extrusion molding, and calender molding, a method of preparing the thermoplastic resin composition, and a molded article including the thermoplastic resin composition.

[Background Art]

An acrylic film is a material having high transparency and weather resistance and is known as a representative finishing material that protects a substance. As a specific example, as demand for a luxurious exterior increases in the market, an acrylic film is used to coat the surface of an outdoor window profile (W/P) that requires high weather resistance. In this case, coating methods such as wrapping, coextrusion, and lamination are used.

In general, since an acrylonitrile-styrene-acrylate copolymer (hereinafter referred to as "ASA" resin) including an alkyl (meth)acrylate-based compound has no ethylenically unsaturated bonds, the ASA resin has excellent physical properties such as processability, impact resistance, chemical resistance, and weather resistance. Due to these advantages, ASA resins are used in various fields such as building materials, interior and exterior materials for automobiles and motorcycles, electrical and electronic products, ships, leisure products, and horticultural products, and demand thereof is rapidly increasing.

A product similar to an acrylic resin for finishing materials has been developed by taking the advantages of ASA resins, which have superior impact strength and chemical resistance compared to acrylic films, and by improving transparency. However, compared to acrylic films composed of a single material, in terms of weather resistance, ASA resins composed of multiple components have the problem of change over time in which an original color changes due to initial moisture absorption and heat history. This phenomenon occurs due to changes in the internal refractive index of a thermoplastic resin including an ASA resin and rearrangement of the microstructure of the resin to become thermodynamically stable.

Therefore, it is necessary to develop a high-quality material having excellent impact resistance, transparency, and weather resistance, having little change over time and excellent color stability due to excellent weather resistance, and being capable of providing an aesthetically pleasing appearance.

[Related Art Documents]

[Patent Documents]

KR 2009-0095764 A

[Disclosure]

[Technical Problem]

Therefore, the present invention has been made in view of the above problems, and it is one object of the present invention to provide a thermoplastic resin composition having excellent impact resistance, transparency, and weather resistance, having little change over time and excellent color stability due to excellent weather resistance, being capable of providing an aesthetically pleasing appearance, and being applicable to injection molding, extrusion molding, and calender molding, a method of preparing the thermoplastic resin composition, and a molded article including the thermoplastic resin composition.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

[Technical Solution]

I) In accordance with one aspect of the present invention, provided is a thermoplastic resin composition including 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein the graft copolymer (a-1) has an alkyl acrylate coverage (X) value of 65 % by weight or more as calculated by Equation 1 below.

$$[Equation\ 1]$$

$$X = \{(G-Y)/Y\} \times 100,$$

wherein G represents a gel content (wt%) based on a total weight of the graft copolymer, and Y represents an alkyl acrylate content (wt%) in a gel based on the total weight of the graft copolymer.

II) In accordance with another aspect of the present invention, provided is a thermoplastic resin composition including 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein, after an injection specimen having a thickness of 3 mm is left for 8,000 hours in a weatherometer according to ASTM G155-1, when a degree of discoloration is measured using a color difference meter and change over time ($\Delta E$) is calculated by Equation 4 below, the change over time ($\Delta E$) is 3 or less.

$$[Equation\ 4]$$

$$\Delta E = \sqrt{(L'-L_0)^2 + (a'-a_0)^2 + (b'-b_0)^2},$$

wherein L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

III) According to I) or II), the one or more (C) selected from the group consisting of a benzotriazole-based UV stabilizer, a benzoate-based UV stabilizer, and a benzophenone-based UV stabilizer may preferably have a melting point of 100 to 200 °C.

IV) According to I) to III), the benzotriazole-based UV stabilizer may preferably include one or more selected from the group consisting of 2-(2H-benzotriazole-2-yl)-4,6-bis(1-methyl-1-phenylethyl)phenol, and 2-[2-hydroxy-3-dimethylbenzylphenyl-5-(1,1,3,3-tetramethylbutyl)]-2H-benzotriazole.

V) According to I) to IV), the benzoate-based UV stabilizer may preferably be 2,4-di-tert-butylphenyl 3,5-di-tert-butyl-4-hydroxybenzoate, hexadecyl 3,5-di-tert-butyl-4-hydroxybenzoate, or a mixture thereof.

VI) According to I) to V), the benzophenone-based UV stabilizer may preferably include one or more selected from the group consisting of 2-hydroxy-4-octoxybenzophenone, 4-benzyloxy-2-hydroxybenzophenone, 2-hydroxy-4-methoxybenzophenone-5-sulfonic acid, 2,2'-dihydroxy-4,4'-dimethoxybenzophenone-5,5'-disulfonic acid, and 2,2'-dihydroxy-4,4'-dimethoxybenzophenone-5,5'-disulfonic acid disodium salt.

VII) According to I) to VI), the NH-type HALS-based UV stabilizer (D) may preferably have a melting point of 60 to 120 °C.

VIII) According to I) to VII), the NH-type HALS-based UV stabilizer (D) may preferably include one or more selected from the group consisting of bis(2,2,6,6-tetramethyl-4-piperidyl)sebacate and bis(1,2,2,6,6-pentamethyl-4-piperidyl)sebacate.

IX) According to I) to VIII), the graft copolymer (a-1) may preferably include 20 to 60 % by weight of alkyl acrylate rubber and 40 to 80 % by weight of an aromatic vinyl compound-vinyl cyanide compound copolymer surrounding the alkyl acrylate rubber.

X) According to I) to IX), based on a total weight of the base resin, a total weight of the graft copolymer (a-1), the graft copolymer (a-2), and the graft copolymer (a-3) may preferably be 15 to 80 % by weight.

XI) According to I) to X), based on a total weight of the base resin, a total weight of the polymer (b-1) and the polymer (b-2) may preferably be 20 to 85 % by weight.

XII) According to I) to XI), the (meth) acrylic acid alkyl ester polymer (b-1) may preferably include one or more selected from the group consisting of (meth)acrylic acid methyl ester, (meth)acrylic acid ethyl ester, (meth)acrylic acid propyl ester, (meth)acrylic acid 2-ethyl hexyl ester, (meth)acrylic acid decyl ester, and (meth)acrylic acid lauryl ester.

XIII) According to I) to XII), the polymer (b-2) may preferably include 60 to 85 % by weight of an alkyl (meth)acrylate, 10 to 35 % by weight of an aromatic vinyl compound, and 1 to 20 % by weight of a vinyl cyanide compound.

XIV) According to I) to XIII), each of the polymer (b-1) and the polymer (b-2) may preferably have a weight average molecular weight of 50,000 to 150,000 g/mol.

XV) According to I) to XIV), after an injection specimen having a thickness of 3 mm is left in a weatherometer for 8,000 hours according to ASTM G155-1, when a degree of discoloration is measured using a color difference meter and change over time ($\Delta E$) is calculated by Equation 4 below, the thermoplastic resin composition may preferably have a change over time ($\Delta E$) of 3 or less.

[Equation 4]

$$\Delta E = \sqrt{(L' - L_0)^2 + (a' - a_0)^2 + (b' - b_0)^2}$$ ,

wherein L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

XVI) In accordance with still another aspect of the present invention, provided is a method of preparing a thermoplastic resin composition, the method including kneading and extruding, at 200 to 300 °C and 100 to 500 rpm, 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein the graft copolymer (a-1) has an alkyl acrylate coverage (X) value of 65 % by weight or more as calculated by Equation 1 below.

[Equation 1]

$$X = \{(G-Y)/Y\} \times 100,$$

wherein G represents a gel content (wt%) based on a total weight of the graft copolymer, and Y represents an alkyl acrylate content (wt%) in a gel based on the total weight of the graft copolymer.

XVII) In accordance with still another aspect of the present invention, provided is a method of preparing a thermoplastic resin composition, the method including kneading and extruding, at 200 to 300 °C and 100 to 500 rpm, 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein, after an injection specimen having a thickness of 3 mm is left for 8,000 hours in a weatherometer according to ASTM G155-1, when a degree of discoloration is measured using a color difference meter and change over time (∆E) is calculated by Equation 4 below, the change over time (∆E) is 3 or less.

[Equation 4]

$$\Delta E = \sqrt{(L'-L_0)^2 + (a'-a_0)^2 + (b'-b_0)^2}\,,$$

wherein L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

XVIII) In accordance with yet another aspect of the present invention, provided is a molded article including the thermoplastic resin composition according to I) to XV).

[Advantageous Effects]

According to the present invention, the present invention has an effect of providing a thermoplastic resin composition having excellent impact resistance, transparency, and weather resistance, having excellent color stability and little change over time due to excellent weather resistance, being capable of providing an aesthetically pleasing appearance, and being applicable to injection molding, extrusion molding, and calender molding, a method of preparing the thermoplastic resin composition, and a molded article including the thermoplastic resin composition.

In addition, in the thermoplastic resin composition of the present invention, by adjusting the alkyl acrylate coverage value of an alkyl acrylate-aromatic vinyl compound-vinyl cyanide compound graft copolymer containing alkyl acrylate rubber having an average particle diameter of 50 to 120 nm within a predetermined range, occurrence of whitening can be reduced during bending processing.

[Best Mode]

Hereinafter, a thermoplastic resin composition of the present invention, a method of preparing the same, and a molded article including the same will be described in detail.

The present inventors confirmed that, when a thermoplastic resin composition was prepared by including a base resin including one or more of three types of alkyl acrylate-aromatic vinyl compound-vinyl cyanide compound graft copolymers each containing rubber having a specific average particle diameter and one or more of a (meth) acrylic acid alkyl ester polymer and a (meth)acrylic acid alkyl ester compound-aromatic vinyl compound-vinyl cyanide compound copolymer; one or more stabilizers having a predetermined molecular weight and selected from the group consisting of a benzotriazole-based UV stabilizer, a benzoate-based UV stabilizer, and a benzophenone-based UV stabilizer; and an NH-type HALS-based UV stabilizer in a predetermined content ratio, impact resistance, transparency, and weather resistance were excellent, and due to excellent weather resistance, change over time was reduced, thereby improving color stability. In addition, the thermoplastic resin composition could be applied to injection molding, extrusion molding, and calender molding. In addition, when the alkyl acrylate coverage value of the alkyl acrylate-aromatic vinyl compound-vinyl cyanide compound graft copolymer was adjusted within a predetermined range, occurrence of whitening was reduced during bending processing. Based on these results, the present inventors conducted further studies to complete the present invention.

The thermoplastic resin composition of the present invention will be described in detail as follows.

The thermoplastic resin composition of the present invention includes 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein the graft copolymer (a-1) has an alkyl acrylate coverage (X) value of 65 % by weight or more as calculated by Equation 1 below. In this case, impact resistance, transparency, and weather resistance may be excellent, and due to excellent weather resistance, change over time may be reduced, thereby improving color stability and providing an aesthetically pleasing appearance. In addition, the thermoplastic resin composition may be applicable to injection molding, extrusion molding, and calender molding.

$$[Equation\ 1]$$

$$X = \{(G-Y)/Y\} \times 100$$

In Equation 1, G represents a gel content (wt%) based on a total weight of the graft copolymer, and Y represents an alkyl acrylate content (wt%) in a gel based on the total weight of the graft copolymer.

Hereinafter, each component of the thermoplastic resin composition of the present invention will be described in detail.

## (a-1) Alkyl acrylate-aromatic vinyl compound-vinyl cyanide compound graft copolymer containing alkyl acrylate rubber having an average particle diameter of 50 to 120 nm

For example, the alkyl acrylate rubber of the graft copolymer (a-1) may have an average particle diameter of 50 to 120 nm, preferably 50 to 110 nm, more preferably 50 to 100 nm, still more preferably 60 to 90 nm. Within this range, excellent light transparency and gloss may be imparted to the finally prepared thermoplastic resin composition.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample may be prepared by diluting 0.1 g of latex (TSC: 35 to 50 wt%) 1,000 to 5,000-fold with distilled water, and the average particle diameter may be measured using flow cells in an auto-dilution manner and in a mode of dynamic light scattering/intensity 300 kHz/intensity-weight Gaussian analysis. At this time, temperature may be set to 23 °C, measurement wavelength may be set to 632.8 nm, and channel width may be set to 10 μsec.

For example, the graft copolymer (a-1) may have an alkyl acrylate coverage (X) value of 65 % by weight or more, preferably 75 % by weight or more, more preferably 85 % by weight or more, still more preferably 85 to 140 % by weight, still more preferably 95 to 120 % by weight as calculated by Equation 1 below. Within this range, mechanical properties, transparency, and gloss may be excellent, and occurrence of whitening may be prevented during bending processing.

[Equation 1]

$$X = \{(G-Y)/Y\} \times 100$$

In Equation 1, G represents a gel content (wt%) based on a total weight of the graft copolymer, and Y represents an alkyl acrylate content (wt%) in a gel based on the total weight of the graft copolymer.

In Equation 1, the alkyl acrylate content in the gel of the graft copolymer refers to an alkyl acrylate content (based on 100% by weight in total of the added graft copolymer) in the insoluble matter collected in the process of calculating a gel content described above. Here, the gel content refers to the content of insoluble matter based on 100% by weight in total of the graft copolymer.

The alkyl acrylate content is quantitatively measured through nuclear magnetic resonance (NMR) analysis or Fourier transform infrared spectroscopy (FT-IR) analysis.

In the present disclosure, unless otherwise specified, NMR analysis means analysis by $^1$H NMR.

In the present disclosure, NMR analysis may be performed using methods commonly practiced in the art. Specific measurement examples are as follows.

- Equipment name: Bruker 600MHz NMR(AVANCE III HD) CPP BB(1H 19F tunable and broadband, with z-gradient) Prodigy Probe
- Measurement conditions: 1H NMR(zg30): ns=32, d1=5s, TCE-d2, at room temp.

In the present disclosure, FT-IR analysis may be performed using methods commonly practiced in the art. Specific measurement examples are as follows.

- Equipment name: Agilent Cary 660
- Measurement conditions: ATR mode

When measuring the gel content, 1 g of a graft copolymer is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the gel content is calculated by Equation 2 below. As a specific measurement example, when measuring the gel content, 1 g of a graft copolymer is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured.

Gel content (wt%) = [Weight (g) of insoluble matter (gel)/Weight (g) of sample] × 100          [Equation 2]

In the present disclosure, the alkyl acrylate coverage value is a parameter that indicates the degree of dispersion of the aromatic vinyl compound-vinyl cyanide compound polymer grafted onto the alkyl acrylate rubber in the alkyl acrylate-aromatic vinyl compound-vinyl cyanide compound graft copolymer. A high alkyl acrylate coverage value indicates that the aromatic vinyl compound-vinyl cyanide compound polymer grafted onto the alkyl acrylate rubber is evenly distributed. That is, the polymer evenly surrounds the rubber. In this case, gloss and transparency may increase, and mechanical properties, colorability, and non-whitening properties may be excellent. In addition, as the alkyl acrylate coverage value increases, the alkyl acrylate homogeneity between the inside and outside of the graft copolymer gel increases. Thus, when the alkyl acrylate coverage value is high, defective areas caused by external stress may be reduced, and voids due to cracks occurring inside the graft copolymer may be reduced, thereby suppressing occurrence of whitening during bending.

The difference between the alkyl acrylate coverage value and the grafting degree is that the alkyl acrylate coverage value is calculated based on the content of the alkyl acrylate actually present in the graft copolymer using an NMR analyzer or FT-IR and the grafting degree is calculated based on the content of rubber components added during polymerization.

The graft copolymer (a-1) may preferably include alkyl acrylate rubber (core) and an aromatic vinyl compound-vinyl cyanide compound copolymer (shell) surrounding the alkyl acrylate rubber.

For example, based on a total weigh of the graft copolymer (a-1), the graft copolymer (a-1) may include 20 to 60 % by weight of alkyl acrylate rubber and 40 to 80 % by weight of an aromatic vinyl compound-vinyl cyanide compound copolymer surrounding the alkyl acrylate rubber, preferably 30 to 50 % by weight of alkyl acrylate rubber and 50 to 70 % by weight of an aromatic vinyl compound-vinyl cyanide compound copolymer surrounding the alkyl acrylate rubber, more preferably 40 to 50 % by weight of alkyl acrylate rubber and 50 to 60 % by weight of an aromatic vinyl compound-vinyl cyanide compound copolymer surrounding the alkyl acrylate rubber. Within this range, mechanical properties, gloss, transparency, and weather resistance may be excellent, and occurrence of whitening may be reduced during bending processing.

For example, the alkyl acrylate rubber may be prepared by emulsion-polymerizing an alkyl acrylate. Preferably, the alkyl acrylate rubber may be prepared by mixing an alkyl acrylate, an emulsifier, an initiator, a grafting agent, a crosslinking agent, an electrolyte, and a solvent and emulsion-polymerizing the mixture. In this case, due to excellent grafting efficiency, mechanical properties may be excellent.

For example, the alkyl acrylate rubber may further include an aromatic vinyl compound. In this case, chemical resistance and impact resistance may be excellent. For example, based on 100 % by weight in total of the alkyl acrylate rubber, the alkyl acrylate rubber may include the aromatic vinyl compound in an amount of 0.1 to 25 % by weight, preferably 2 to 23 % by weight, more preferably 5 to 20 % by weight. Within this range, impact resistance, gloss, transparency, and weather resistance may be excellent without deteriorating physical properties. In addition, due to excellent weather resistance, change over time may be reduced.

For example, the aromatic vinyl compound-vinyl cyanide compound copolymer (shell) may have a weight average molecular weight of 40,000 to 120,000 g/mol, preferably 50,000 to 110,000 g/mol, more preferably 60,000 to 110,000 g/mol. Within this range, processability may be excellent without reducing impact strength, and occurrence of whitening may be reduced during bending processing.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 ul, column model: 1× PLgel 10 um MiniMix-B (250 × 4.6 mm) + 1× PLgel 10 um MiniMix-B (250 × 4.6 mm) + 1× PLgel 10 um MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on a total weight of the aromatic vinyl compound-vinyl cyanide compound copolymer (shell), the aromatic vinyl compound-vinyl cyanide compound copolymer (shell) may include 55 to 85 % by weight of an aromatic vinyl compound and 15 to 45 % by weight of a vinyl cyanide compound, preferably 60 to 80 % by weight of an aromatic vinyl compound and 20 to 40 % by weight of a vinyl cyanide compound, more preferably 65 to 75 % by weight of an aromatic vinyl compound and 25 to 35 % by weight of a vinyl cyanide compound. Within this range, impact resistance and weather resistance may be excellent.

Preferably, the aromatic vinyl compound-vinyl cyanide compound copolymer (shell) may further include an alkyl acrylate. In this case, impact resistance, weather resistance, and processability may be excellent, and occurrence of whitening may be reduced during bending processing.

For example, based on a total weight of the aromatic vinyl compound-vinyl cyanide compound copolymer (shell), the aromatic vinyl compound-vinyl cyanide compound copolymer (shell) may include 55 to 85 % by weight of an aromatic vinyl compound, 10 to 35 % by weight of a vinyl cyanide compound, and 1 to 25 % by weight of an alkyl acrylate, preferably 60 to 80 % by weight of an aromatic vinyl compound, 15 to 30 % by weight of a vinyl cyanide compound, and 3 to 20 % by weight of an alkyl acrylate, more preferably 65 to 72 % by weight of an aromatic vinyl compound, 20 to 25 % by weight of a vinyl cyanide compound, and 5 to 15 % by weight of an alkyl acrylate. Within this range, impact resistance and weather resistance may be excellent.

For example, the graft copolymer (a-1) may be prepared by emulsion polymerization. In this case, gloss and surface hardness may be excellent.

Emulsion polymerization methods commonly practiced in the art to which the present invention pertains may be used in the present invention without particular limitation. For example, an emulsion graft polymerization method may be used.

For example, the graft copolymer (a-1) may have a grafting degree of 60 to 150 %, preferably 65 to 140 %, more preferably 65 to 130 %, still more preferably 65 to 120 %, still more preferably 65 to 110 %, still more preferably 65 to 100 %, still more preferably 65 to 80 % as calculated by Equation 3 below. Within this range, impact resistance and processability may be excellent, and occurrence of whitening may be reduced during bending processing.

$$\text{Grafting degree (\%) = [weight (g) of grafted monomers/Rubber weight (g)]} \times 100 \qquad \text{[Equation 3]}$$

In Equation 3, the weight (g) of grafted monomers is obtained by subtracting rubber weight (g) from the weight (g) of insoluble matter (gel) obtained by dissolving the graft copolymer in acetone and performing centrifugation, and the rubber weight (g) is the weight (g) of rubber components theoretically added to graft copolymer powder.

When the weight of insoluble matter (gel) is measured, 0.5 g of the powdered graft copolymer (A) is added to 50 ml of acetone, followed by stirring at room temperature for 12 hours. Then, centrifugation is performed to separate insoluble matter that is not dissolved in acetone, followed by drying for 12 hours. Then, the weight of the insoluble matter (gel) is measured. The rubber weight (g) is the weight (g) of rubber components theoretically added to 0.5 g of the powdered graft copolymer (A).

As a specific measurement example, when measuring the weight (g) of insoluble matter (gel), 0.5 g of a powdered graft copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

For example, based on a total weight of the base resin, the graft copolymer (a-1) may be included in an amount of 55 to 80 % by weight, preferably 60 to 75 % by weight, more preferably 65 to 70 % by weight. Within this range, mechanical properties, gloss, and transparency may be excellent, and occurrence of whitening may be reduced during bending processing.

In the present disclosure, for example, the alkyl acrylate may be an alkyl acrylate containing an alkyl group having 1 to 15 carbon atoms. Preferably, the alkyl acrylate may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing an alkyl group having 1 to 4 carbon atoms, still more preferably butyl acrylate, ethylhexyl acrylate, or a mixture thereof, still more preferably butyl acrylate.

In the present disclosure, for example, the aromatic vinyl compound may include one or more selected from the group consisting of styrene, $\alpha$-methyl styrene, o-methyl styrene, $\rho$-methyl styrene, m-methyl styrene, ethyl styrene, isobutyl styrene, t-butyl styrene, o-bromostyrene, $\rho$-bromostyrene, m-bromostyrene, o-chlorostyrene, $\rho$-chlorostyrene, m-chlorostyrene, vinyltoluene, vinylxylene, fluorostyrene, and vinylnaphthalene, preferably one or more selected from the group consisting of styrene and $\alpha$-methyl styrene, more preferably styrene. In this case, due to appropriate fluidity, processability and mechanical properties such as impact resistance may be excellent.

In the present disclosure, for example, the vinyl cyanide compound may include one or more selected from the group consisting of acrylonitrile, methacrylonitrile, phenylacrylonitrile, and $\alpha$-chloroacrylonitrile, preferably acrylonitrile.

In the present disclosure, a polymer including a certain compound (monomer) means a polymer prepared by polymerizing the compound (monomer), and a unit in the polymer is derived from the compound.

### (a-2) Alkyl acrylate-aromatic vinyl compound-vinyl cyanide compound graft copolymer containing alkyl acrylate rubber having an average particle diameter of 150 to 600 nm

For example, the alkyl acrylate rubber of the graft copolymer (a-2) may have an average particle diameter of 150 to 600 nm, preferably 200 to 600 nm, more preferably 250 to 500 nm, still more preferably 300 to 470 nm, still more preferably 330 to 430 nm. Within this range, mechanical properties such as impact strength may be excellent.

The graft copolymer (a-2) may preferably include alkyl acrylate rubber (core) and an aromatic vinyl compound and vinyl cyanide compound (shell) surrounding the alkyl acrylate rubber (core). In this case, mechanical properties and processability may be excellent.

For example, based on a total weight of the graft copolymer (a-2), the graft copolymer (a-2) may include 35 to 65 % by weight of alkyl acrylate rubber, 20 to 55 % by weight of an aromatic vinyl compound, and 1 to 25 % by weight of a vinyl cyanide compound. Within this range, mechanical properties, such as impact strength, and transparency may be excellent.

Preferably, the graft copolymer (a-2) may include 40 to 60 % by weight of alkyl acrylate rubber, 25 to 50 % by weight of an aromatic vinyl compound, and 5 to 20 % by weight of a vinyl cyanide compound. Within this range, mechanical properties, such as impact strength, and transparency may be excellent.

More preferably, the graft copolymer (a-2) may include 45 to 55 % by weight of alkyl acrylate rubber, 33 to 43 % by weight of an aromatic vinyl compound, and 10 to 15 % by weight of a vinyl cyanide compound. Within this range, mechanical properties, such as impact strength, and transparency may be excellent.

The types of alkyl acrylate rubber, aromatic vinyl compound, and vinyl cyanide compound included in the graft copolymer (a-2) may be the same as the types of alkyl acrylate rubber, aromatic vinyl compound, and vinyl cyanide compound included in the graft copolymer (a-1) of the present invention.

For example, the graft copolymer (a-2) may be prepared by emulsion polymerization. In this case, mechanical properties, such as impact strength, and transparency may be excellent.

Emulsion polymerization methods commonly practiced in the art to which the present invention pertains may be used in the present invention without particular limitation. For example, an emulsion graft polymerization method may be used.

For example, the graft copolymer (a-2) may have a grafting degree of 40 to 120 %, preferably 45 to 100 %, more preferably 45 to 80 % as calculated by Equation 3. Within this range, mechanical properties, such as impact strength, and processability may be excellent.

For example, based on a total weight of the base resin, the graft copolymer (a-2) may be included in an amount of 5 to 35 % by weight, preferably 10 to 30 % by weight, more preferably 15 to 25 % by weight. Within this range, mechanical properties and transparency may be excellent.

**(a-3) Alkyl acrylate-aromatic vinyl compound-vinyl cyanide compound graft copolymer containing alkyl acrylate rubber having an average particle diameter of 80 nm or more and less than 150 nm**

For example, the alkyl acrylate rubber of the graft copolymer (a-3) may have an average particle diameter of 80 nm or more and less than 150 nm, preferably 90 nm or more and less than 150 nm, more preferably 91 to 140 nm, still more preferably 101 to 140 nm, still more preferably 111 to 140 nm. Within this range, gloss, transparency, and colorability may be excellent while maintaining mechanical properties.

The graft copolymer (a-3) may preferably include alkyl acrylate rubber (core) and an aromatic vinyl compound and vinyl cyanide compound (shell) surrounding the alkyl acrylate rubber (core). In this case, gloss, transparency, and colorability may be excellent while maintaining mechanical properties.

For example, based on a total weight of the graft copolymer (a-3), the graft copolymer (a-3) may include 35 to 65 % by weight of alkyl acrylate rubber, 20 to 55 % by weight of an aromatic vinyl compound, and 1 to 25 % by weight of a vinyl cyanide compound. Within this range, gloss, transparency, and colorability may be excellent while maintaining mechanical properties.

Preferably, the graft copolymer (a-3) may include 40 to 60 % by weight of alkyl acrylate rubber, 25 to 50 % by weight of an aromatic vinyl compound, and 5 to 20 % by weight of a vinyl cyanide compound. Within this range, gloss, transparency, and colorability may be excellent while maintaining mechanical properties.

More preferably, the graft copolymer (a-3) may include 45 to 55 % by weight of alkyl acrylate rubber, 33 to 43 % by weight of an aromatic vinyl compound, and 10 to 15 % by weight of a vinyl cyanide compound. Within this range, gloss, transparency, and colorability may be excellent while maintaining mechanical properties.

The types of the alkyl acrylate rubber, aromatic vinyl compound, and vinyl cyanide compound included in the graft copolymer (a-3) may be the same as the types of the alkyl acrylate rubber, aromatic vinyl compound, and vinyl cyanide compound included in the graft copolymer (a-1) of the present invention.

For example, the graft copolymer (a-3) may be prepared by emulsion polymerization. In this case, gloss, transparency, and colorability may be excellent while maintaining mechanical properties.

Emulsion polymerization methods commonly practiced in the art to which the present invention pertains may be used in the present invention without particular limitation. For example, an emulsion graft polymerization method may be used.

For example, the graft copolymer (a-3) may have a grafting degree of 15 to 60 %, preferably 20 to 50 %, more preferably 25 to 45 % as calculated by Equation 3. Within this range, the processing dispersion between the (meth)acrylic acid alkyl ester polymer (b-1) and the (meth)acrylic acid alkyl ester compound-aromatic vinyl compound-vinyl cyanide compound copolymer (b-2) may be excellent.

For example, based on a total weight of the base resin, the graft copolymer (a-3) may be included in an amount of 5 to 70 % by weight, preferably 10 to 65 % by weight, more preferably 15 to 60 % by weight. Within this range, gloss and transparency may be excellent, and occurrence of whitening may be reduced during bending processing.

For example, based on a total weight of the base resin, a total weight of the graft copolymer (a-1), the graft copolymer (a-2), and the graft copolymer (a-3) may be 15 to 80 % by weight, preferably 15 to 75 % by weight, more preferably 20 to 70 % by weight, still more preferably 30 to 70 % by weight, still more preferably 40 to 70 % by weight, still more preferably 50 to 70 % by weight, still more preferably 57 to 70 % by weight. Within this range, mechanical properties, gloss, transparency, and processability may be excellent.

For example, the graft copolymer (A) may include one or more selected from the group consisting of the graft copolymer (a-1), the graft copolymer (a-2), and the graft copolymer (a-3). In this case, mechanical properties, gloss, transparency, weather resistance, and colorability may be excellent.

The graft copolymer (A) may preferably be the graft copolymer (a-1). In this case, gloss, transparency, and weather resistance may be excellent while maintaining mechanical properties, and occurrence of whitening may be reduced during bending processing, thereby providing an aesthetically pleasing appearance. In addition, due to excellent weather resistance, change over time may be reduced, and color stability may be excellent.

The graft copolymer (A) may preferably be the graft copolymer (a-2). In this case, mechanical properties and weather resistance may be excellent.

The graft copolymer (A) may preferably be the graft copolymer (a-3). In this case, gloss, transparency, and weather resistance may be excellent while maintaining mechanical properties.

The graft copolymer (A) may preferably be a mixture of the graft copolymer (a-2) and the graft copolymer (a-3). In this case, mechanical properties, gloss, and transparency may be excellent. Due to excellent weather resistance, change over time may be reduced.

For example, in the mixture of the graft copolymer (a-2) and the graft copolymer (a-3), the weight ratio (a-2:a-3) of the graft copolymer (a-2) to the graft copolymer (a-3) may be 40:60 to 60:40, preferably 45:55 to 55:45. Within this range, mechanical properties, such as impact strength, gloss, and colorability may be improved.

In the present disclosure, the weight ratio of A to B means the weight ratio of A:B.

**(b-1) (Meth)acrylic acid alkyl ester polymer**

For example, the (meth)acrylic acid alkyl ester polymer (b-1) may include one or more selected from the group consisting of a (meth)acrylic acid methyl ester, a (meth)acrylic acid ethyl ester, a (meth)acrylic acid propyl ester, a (meth)acrylic acid 2-ethyl hexyl ester, a (meth)acrylic acid decyl ester, and a (meth)acrylic acid lauryl ester, preferably a methacrylic acid alkyl ester, an acrylic acid alkyl ester, or a mixture thereof, more preferably a polymethyl methacrylate resin. In this case, mechanical properties, fluidity, and transparency may be excellent.

In the present disclosure, the (meth)acrylic acid alkyl ester polymer may be a polymer including a (meth)acrylic acid alkyl ester in an amount of greater than 85 % by weight, 90 % by weight or more, or 95 % by weight or more.

In the present disclosure, unless noted otherwise, the "acrylic acid alkyl ester" or the "methacrylic acid alkyl ester" may both mean the "(meth)acrylic acid alkyl ester".

For example, the polymethyl methacrylate resin may include methyl methacrylate and methyl acrylate. Preferably, the polymethyl methacrylate resin may include methyl acrylate in an amount of 1 to 10 % by weight, more preferably 2 to 7 % by weight. Within this range, due to excellent compatibility with the (meth)acrylic acid alkyl ester compound-aromatic vinyl compound-vinyl cyanide compound copolymer (b-2), gloss, fluidity, and mechanical properties may be improved.

For example, the polymer (b-1) may have a weight average molecular weight of 50,000 to 150,000 g/mol, preferably 60,000 to 130,000 g/mol, more preferably 70,000 g/mol to 110,000 g/mol, still more preferably 70,000 to 100,000 g/mol. Within this range, transparency, gloss, and fluidity may be excellent while maintaining impact resistance.

For example, the (meth)acrylic acid alkyl ester polymer (b-1) may have a glass transition temperature of 80 to 130 °C, preferably 90 to 120 °C. Within this range, heat resistance may be excellent.

In the present disclosure, the glass transition temperature may be measured using a differential scanning calorimeter (DSC) according to ASTM D3418. As a specific example, the glass transition temperature may be measured at a heating rate of 10 °C/min using a differential scanning calorimeter (Q100 DSC, TA Instruments Co.).

For example, based on a total weight of the base resin, the (meth)acrylic acid alkyl ester polymer (b-1) may be included in an amount of 15 to 85 % by weight, preferably 20 to 80 % by weight, more preferably 25 to 75 % by weight. Within this range, transparency and gloss may be excellent while maintaining mechanical properties, and occurrence of whitening may be reduced during bending processing.

For example, the (meth)acrylic acid alkyl ester polymer (b-1) may be prepared by suspension polymerization. Suspension polymerization methods commonly practiced in the art to which the present invention pertains may be used in the present invention without particular limitation.

**(b-2) (Meth)acrylic acid alkyl ester compound-aromatic vinyl compound-vinyl cyanide compound copolymer**

For example, based on a total weight of the polymer (b-2), the polymer (b-2) may include 60 to 85 % by weight of an alkyl (meth)acrylate, 10 to 35 % by weight of an aromatic vinyl compound, and 1 to 20 % by weight of a vinyl cyanide compound. Within this range, compatibility with the graft copolymer (A) and the (meth)acrylic acid alkyl ester polymer (b-1) may be excellent, and mechanical properties, transparency, and gloss may be excellent. In addition, occurrence of whitening may be reduced during bending processing.

Preferably, based on a total weight of the polymer (b-2), the polymer (b-2) may include 65 to 80 % by weight of a (meth)acrylic acid alkyl ester compound, 15 to 30 % by weight of an aromatic vinyl compound, and 3 to 15 % by weight of a vinyl cyanide compound. Within this range, compatibility with the graft copolymer (A) and the (meth)acrylic acid alkyl ester polymer (b-1) may be excellent, and mechanical properties, transparency, and gloss may be excellent. In addition, occurrence of whitening may be reduced during bending processing.

More Preferably, based on a total weight of the polymer (b-2), the polymer (b-2) may include 68 to 74 % by weight of a (meth)acrylic acid alkyl ester compound, 20 to 25 % by weight of an aromatic vinyl compound, and 5 to 10 % by weight of a vinyl cyanide compound. Within this range, compatibility with the graft copolymer (A) and the (meth)acrylic acid alkyl ester polymer (b-1) may be excellent, and mechanical properties, transparency, and gloss may be excellent. In addition, occurrence of whitening may be reduced during bending processing.

In the present disclosure, for example, the (meth)acrylic acid alkyl ester compound may include one or more selected from the group consisting of a (meth)acrylic acid methyl ester, a (meth)acrylic acid ethyl ester, a (meth)acrylic acid propyl ester, a (meth)acrylic acid 2-ethyl hexyl ester, a (meth)acrylic acid decyl ester, and a (meth)acrylic acid lauryl ester.

The types of the aromatic vinyl compound and vinyl cyanide compound included in the polymer (b-2) may be the same as the types of the aromatic vinyl compound and vinyl cyanide compound included in the graft copolymer (a-1) of the present invention.

For example, the polymer (b-2) may have a weight average molecular weight of 50,000 to 150,000 g/mol, preferably 60,000 to 130,000 g/mol, more preferably 70,000 to 120,000 g/mol, still more preferably 80,000 to 110,000 g/mol. Within this range, tensile strength, flexural strength, impact strength, and scratch resistance may be excellent.

For example, based on a total weight of the base resin, the polymer (b-2) may be included in an amount of 5 to 45 % by weight, preferably 5 to 40 % by weight, more preferably 10 to 35 % by weight. Within this range, compatibility with the (meth)acrylic acid alkyl ester polymer (b-1), mechanical properties, and fluidity may be excellent.

For example, the polymer (b-2) may be prepared by bulk polymerization. Bulk polymerization methods commonly practiced in the art to which the present invention pertains may be used in the present invention without particular limitation.

For example, based on a total weight of the base resin, a total weight of the polymer (b-1) and the polymer (b-2) may be 20 to 85 % by weight, preferably 25 to 85 % by weight, more preferably 30 to 80 % by weight, still more preferably 30 to 70 % by weight, still more preferably 30 to 60 % by weight, still more preferably 30 to 50 % by weight, still more preferably 30 to 43 % by weight. Within this range, mechanical properties, gloss, transparency, weather resistance, and colorability may be excellent.

## (C) One or more having a molecular weight of 280 to 600 g/mol and selected from the group consisting of having a benzotriazole-based UV stabilizer, a benzoate-based UV stabilizer, and a benzophenone-based UV stabilizer

For example, based on 100 parts by weight of the base resin, the one or more (C) selected from the group consisting of a benzotriazole-based UV stabilizer, a benzoate-based UV stabilizer, and a benzophenone-based UV stabilizer may be included in an amount of 0.5 to 3.5 parts by weight, preferably 1 to 3 parts by weight, more preferably 1 to 2.6 parts by weight, still more preferably 1.5 to 2.2 parts by weight. Within this range, impact resistance, transparency, and weather resistance may be excellent. Due to excellent weather resistance, change over time may be reduced, color stability may be excellent, and an aesthetically pleasing appearance may be realized.

For example, the one or more (C) selected from the group consisting of a benzotriazole-based UV stabilizer, a benzoate-based UV stabilizer, and a benzophenone-based UV stabilizer may have a molecular weight of 280 to 600 g/mol, preferably 300 to 600 g/mol, more preferably 300 to 550 g/mol, still more preferably 300 to 500 g/mol, still more preferably 350 to 500 g/mol, still more preferably 400 to 500 g/mol, still more preferably 420 to 470 g/mol, most preferably 440 to 455 g/mol. Within this range, mechanical properties, gloss, transparency, and weather resistance may be excellent, and due to excellent weather resistance, change over time may be reduced, thereby providing a luxurious appearance.

For example, the one or more (C) selected from the group consisting of a benzotriazole-based UV stabilizer, a benzoate-based UV stabilizer, and a benzophenone-based UV stabilizer may have a melting point of 100 to 200 °C, preferably 110 to 200 °C, more preferably 120 to 200 °C, still more preferably 120 to 180 °C, still more preferably 120 to 160 °C, still more preferably 125 to 150 °C, still more preferably 130 to 145 °C, most preferably 135 to 144 °C. Within this range, mechanical properties, gloss, transparency, and weather resistance may be excellent, and due to excellent weather resistance, change over time may be reduced, thereby providing a luxurious appearance.

In the present disclosure, melting point may be measured using a differential scanning calorimeter 2920 (DSC 2920, TA Co.). As a specific example of measuring melting point, after a DSC is equilibrated at a temperature of 0 °C, the temperature is increased to 180 °C at a rate of 20 °C/min, the temperature is reduced to -60 °C at a rate of 20 °C/min, and then the temperature is increased to 180 °C at a rate of 10 °C/min. At this time, in the second temperature increase section, melting point is obtained from the top region of an endothermic curve.

For example, the benzotriazole-based UV stabilizer may include one or more selected from the group consisting of 2-(2H-benzotriazole-2-yl)-4,6-bis(1-methyl-1-phenylethyl)phenol and 2-[2-hydroxy-3-dimethylbenzylphenyl-5-(1,1,3,3-tetramethylbutyl)]-2H-benzotriazole, preferably 2-(2H-benzotriazole-2-yl)-4,6-bis(1-methyl-1-phenylethyl)phenol (UV234). In this case, mechanical properties, gloss, transparency, and weather resistance may be excellent. Due to excellent weather resistance, change over time may be reduced, color stability may be excellent, and an aesthetically pleasing appearance may be realized.

For example, the benzoate-based UV stabilizer may be 2,4-di-tert-butylphenyl 3,5-di-tert-butyl-4-hydroxybenzoate, hexadecyl 3,5-di-tert-butyl-4-hydroxybenzoate, or a mixture thereof, preferably 2,4-di-tert-butylphenyl 3,5-di-tert-butyl-4-hydroxybenzoate. In this case, mechanical properties, gloss, transparency, and weather resistance may be excellent. Due to excellent weather resistance, change over time may be reduced, color stability may be excellent, and an aesthetically pleasing appearance may be realized.

For example, the benzophenone-based UV stabilizer may include one or more selected from the group consisting of 2-hydroxy-4-octoxybenzophenone, 4-benzyloxy-2-hydroxybenzophenone, 2-hydroxy-4-methoxybenzophenone-5-sulfonic acid, 2,2'-dihydroxy-4,4'-dimethoxybenzophenone-5,5'-disulfonic acid, and 2,2'-dihydroxy-4,4'-dimethoxybenzophenone-5,5'-disulfonic acid disodium salt, preferably 4-benzyloxy-2-hydroxybenzophenone. In this case, mechanical properties, gloss, transparency, and weather resistance may be excellent. Due to excellent weather resistance, change over time may be reduced, color stability may be excellent, and an aesthetically pleasing appearance may be realized.

## (D) NH-type HALS-based UV stabilizer having a molecular weight of 300 to 700 g/mol

For example, based on 100 parts by weight of the base resin, the NH-type HALS-based UV stabilizer (D) may be included in an amount of greater than 0.6 parts by weight and 2 parts by weight or less, preferably 0.7 to 1.7 parts by weight, more preferably 0.7 to 1.2 parts by weight. Within this range, impact resistance, transparency, and weather resistance may be excellent. Due to excellent weather resistance, change over time may be reduced, color stability may be excellent, and an aesthetically pleasing appearance may be realized.

For example, the NH-type HALS-based UV stabilizer (D) may have a molecular weight of 300 to 700 g/mol, preferably 350 to 650 g/mol, more preferably 400 to 600 g/mol, still more preferably 450 to 550 g/mol, still more preferably 460 to 510 g/mol. Within this range, mechanical properties, gloss, transparency, and weather resistance may be excellent. Due to excellent weather resistance, change over time may be reduced, color stability may be excellent, and an aesthetically pleasing appearance may be realized.

For example, the NH-type HALS-based UV stabilizer (D) may have a melting point of 60 to 120 °C, preferably 65 to 110 °C, more preferably 70 to 100 °C, still more preferably 70 to 95 °C, still more preferably 74 to 92 °C, still more preferably 78 to 87 °C. Within this range, mechanical properties, gloss, transparency, and weather resistance may be excellent. Due to excellent weather resistance, change over time may be reduced, color stability may be excellent, and an aesthetically pleasing appearance may be realized.

For example, the NH-type HALS-based UV stabilizer (D) may include one or more selected from the group consisting of bis(2,2,6,6-tetramethyl-4-piperidyl)sebacate and bis(1,2,2,6,6-pentamethyl-4-piperidyl)sebacate, preferably bis(2,2,6,6-tetramethyl-4-piperidyl)sebacate. In this case, mechanical properties, gloss, transparency, and weather resistance may be excellent. Due to excellent weather resistance, change over time may be reduced, color stability may be excellent, and a luxurious appearance may be realized.

For example, the amount of the UV stabilizer (C) having a molecular weight of 280 to 600 g/mol may be greater than the amount of the NH-type HALS-based UV stabilizer (D). In this case, mechanical properties, gloss, transparency, and weather resistance may be excellent. Due to excellent weather resistance, change over time may be reduced, color stability may be excellent, and a luxurious appearance may be realized.

For example, the weight ratio (C:D) of the UV stabilizer (C) having a molecular weight of 280 to 600 g/mol to the NH-type HALS-based UV stabilizer (D) may be 1.3:1 to 3.2:1, preferably 1.5:1 to 3.0:1, more preferably 2.0:1 to 3.0:1, still more preferably 2.5:1 to 3.0:1. Within this range, mechanical properties, gloss, transparency, and weather resistance may be excellent. Due to excellent weather resistance, change over time may be reduced, color stability may be excellent, and a luxurious appearance may be realized.

According to the present invention, by a combination of the UV stabilizer (C) having a molecular weight of 280 to 600 g/mol and the NH-type HALS-based UV stabilizer (D) having a molecular weight of 300 to 700 g/mol, preferably a combination of the benzotriazole-based UV stabilizer (C) having a molecular weight 280 to 600 g/mol and the NH-type HALS-based UV stabilizer (D) having a molecular weight of 300 to 700 g/mol, more preferably a combination of the benzotriazole-based UV stabilizer (C) having a molecular weight of 280 to 600 g/mol and a melting point of 100 to 200 °C and the NH-type HALS-based UV stabilizer (D) having a molecular weight of 300 to 700 g/mol and a melting point of 60 to 120 °C, mechanical properties, transparency, and weather resistance may be excellent. Due to excellent weather resistance, change over time may be reduced.

**Thermoplastic resin composition**

After an injection specimen having a thickness of 3 mm is left for 8,000 hours in a weatherometer according to ASTM G155-1, when the degree of discoloration is measured using a color difference meter and change over time ($\Delta E$) is calculated by Equation 4 below, the thermoplastic resin composition may have a change over time ($\Delta E$) of 3 or less, preferably 2.5 or less, more preferably 2 or less, still more preferably 1.8 or less, still more preferably 1.6 or less, still more preferably 0.1 to 1.6. Within this range, mechanical properties, weather resistance, and transparency may be excellent. Due to excellent weather resistance, change over time may be reduced, color stability may be excellent, and an aesthetically pleasing appearance may be realized.

[Equation 4]

$$\Delta E = \sqrt{(L'-L_0)^2 + (a'-a_0)^2 + (b'-b_0)^2}$$

In Equation 4, L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

For example, after an injection specimen having a thickness of 3 mm is left for 4,000 hours in a weatherometer according to ASTM G155-1, when the degree of discoloration is measured using a color difference meter and change over time ($\Delta E$) is calculated by Equation 4 below, the thermoplastic resin composition may have a change over time ($\Delta E$) of 2 or less, preferably 1.6 or less, more preferably 1.3 or less, still more preferably 1.0 or less, still more preferably 0.1 to 1.0. Within this range, mechanical properties, weather resistance, and transparency may be excellent. Due to excellent weather resistance, change over time may be reduced, color stability may be excellent, and an aesthetically pleasing appearance may be realized.

For example, the thermoplastic resin composition may have a haze of 10 % or less, preferably 8 % or less, more preferably 6 % or less, still more preferably 0.1 to 6 % as measured using a sheet having a thickness of 0.15 mm according to ASTM D1003. Within this range, physical property balance, transparency, and colorability may be excellent.

For example, the thermoplastic resin composition may have a total light transmittance of 80 % or more, preferably 85 % or more, more preferably 90 % or more, still more preferably 90 to 120 % as measured using a sheet having a thickness of 0.15 mm according to ASTM D1003. Within this range, physical property balance, transparency, and colorability may be excellent.

For example, when a sheet made of the thermoplastic resin composition having dimensions of 10 cm × 10 cm × 0.15 mm in width, length, and thickness is folded in a machined direction (MD) and a traverse direction (TD) by hand, and occurrence of whitening on the bent surface is observed with the naked eye, occurrence of whitening may be reduced. In this case, physical property balance, impact resistance, and transparency may be excellent, and an aesthetically pleasing appearance may be realized.

For example, when tensile strength is measured at a tensile rate of 10 mm/min in the machine direction (MD) of a sheet having a thickness of 0.15 mm according to ASTM D412, the thermoplastic resin composition may have a tensile strength of 300 kgf/cm$^2$ or more, preferably 310 kgf/cm$^2$ or more, more preferably 320 kgf/cm$^2$ or more, still more preferably 330 kgf/cm$^2$ or more, still more preferably 350 kgf/cm$^2$ or more, still more preferably 350 to 600 kgf/cm$^2$. Within this range, physical property balance may be excellent, and the mechanical properties of an injection-molded article, an extrusion-molded article, and a calendering-molded article may be excellent.

For example, when elongation is measured at a tensile rate of 10 mm/min in the machine direction (MD) of a sheet having a thickness of 0.15 mm according to ASTM D412, the thermoplastic resin composition may have an elongation of 10 % or more, preferably 30 % or more, more preferably 40 % or more, still more preferably 50 % or more, still more preferably 60 % or more, still more preferably 60 to 80 %. Within this range, physical property balance may be excellent, and the mechanical properties of an injection-molded article, an extrusion-molded article, and a calendering-molded article may be excellent.

For example, when tear strength is measured at a tensile rate of 10 mm/min in the machine direction (MD) of a sheet having a thickness of 0.15 mm according to ASTM D624, the thermoplastic resin composition may have a tear strength of 67 kgf/cm or more, preferably 72 kgf/cm or more, more preferably 80 kgf/cm or more, still more preferably 90 kgf/cm or more, still more preferably 90 to 130 kgf/cm. Within this range, physical property balance may be excellent, and the mechanical properties of an injection-molded article, an extrusion-molded article, and a calendering-molded article may be excellent.

For example, when tensile strength is measured at a tensile rate of 10 mm/min in the transverse direction (TD) of a sheet having a thickness of 0.15 mm according to ASTM D412, the thermoplastic resin composition may have a tensile strength of 230 kgf/cm$^2$ or more, preferably 245 kgf/cm$^2$ or more, more preferably 250 kgf/cm$^2$ or more, still more preferably 250 to 500 kgf/cm$^2$. Within this range, physical property balance may be excellent, and the mechanical properties of an injection-molded article, an extrusion-molded article, and a calendering-molded article may be excellent.

For example, when elongation is measured at a tensile rate of 10 mm/min in the transverse direction (TD) of a sheet having a thickness of 0.15 mm according to ASTM D412, the thermoplastic resin composition may have an elongation of 14 % or more, preferably 20 % or more, more preferably 30 % or more, still more preferably 40 % or more, still more preferably 50 % or more, still more preferably 50 to 75 %. Within this range, physical property balance may be excellent, and the mechanical properties of an injection-molded article, an extrusion-molded article, and a calendering-molded article may be excellent.

For example, when tear strength is measured at a tensile rate of 10 mm/min in the transverse direction (TD) of a sheet having a thickness of 0.15 mm according to ASTM D624, the thermoplastic resin composition may have a tear strength of 55 kgf/cm or more, preferably 60 kgf/cm or more, more preferably 65 kgf/cm or more, still more preferably 70 kgf/cm or more, still more preferably 75 kgf/cm or more, still more preferably 75 to 95 kgf/cm. Within this range, physical property balance may be excellent, and the mechanical properties of an injection-molded article, an extrusion-molded article, and a calendering-molded article may be excellent.

When necessary, based on 100 parts by weight of the base resin, the thermoplastic resin composition may further include 0.01 to 5 parts by weight, 0.05 to 3 parts by weight, 0.1 to 2 parts by weight, or 0.5 to 1 part by weight of each of one or more selected from the group consisting of a heat stabilizer, a dye, a pigment, a colorant, a lubricant, a release agent, an antistatic agent, an antibacterial agent, a processing aid, a metal deactivator, a flame retardant, a smoke suppressant, an anti-drip agent, an anti-friction agent, and an anti-wear agent. Within this range, the required physical properties of the thermoplastic resin composition of the present invention may be implemented without deterioration in the intrinsic physical properties thereof.

The heat stabilizer may preferably include a first heat stabilizer and a second heat stabilizer.

For example, the first heat stabilizer may be a phenolic heat stabilizer. Preferably, the first heat stabilizer may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-dit-butyl-4-hydroxyphenyl)propionic acid stearyl ester, more preferably octadecyl 3-(3,5-di-tert-butyl-4-hydroxyphenyl)propanoate (IR1076).

For example, the second heat stabilizer may be a phosphorus heat stabilizer. Preferably, the second heat stabilizer may include one or more selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl)phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyldibenz[d,f] [1.3.2]-dioxa-phospepin-6-yl}oxy]-N,N-bis[2-[{2,4,8,10-tetra-t-butyl-dibenz[d,f] [1.3.2]-dioxaphospepin-6-yl}oxy]ethyl]-ethanamine, and 6-[3-(3-t-butyl-4-hydroxy-5-methylphenyl)propoxy]-2,4,8,10-tetra-t-butyldibenz[d,f] [1.3.2]-dioxaphospepin, more preferably tris(2,4-di-tert-butylphenyl) phosphite (IF168).

The lubricant may preferably include one or more selected from the group consisting of an aliphatic amide-based lubricant, a fatty acid ester-based lubricant, and olefin-based wax.

The aliphatic amide-based lubricant may preferably include one or more selected from the group consisting of stearamide, oleamide, erucamide, ethylene bis stearamide, and ethylene bis oleamide.

The fatty acid ester-based lubricant may preferably include one or more selected from the group consisting of a fatty acid ester of an alcohol or polyhydric alcohol, hardened oil, butyl stearate, monoglyceride stearate, pentaerythritol tetrastearate, stearylstearate, ester wax, and an alkyl phosphate ester.

The olefin-based wax may preferably be polyethylene wax.

**Method of preparing thermoplastic resin composition**

A method of preparing the thermoplastic resin composition of the present invention includes a step of kneading and extruding, at 200 to 300 °C and 100 to 500 rpm, 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol, wherein the graft copolymer (a-1) has an alkyl acrylate coverage (X) value of 65 % by weight or more as calculated by Equation 1 below. In this case, mechanical properties, transparency, and weather resistance may be excellent. Due to excellent weather resistance, change over time may be reduced, color stability may be excellent, and an aesthetically pleasing appearance may be provided. In addition, the thermoplastic resin composition may be applicable to injection molding, extrusion molding, and calender molding.

$$[\text{Equation 1}]$$

$$X = \{(G-Y)/Y\} \times 100$$

In Equation 1, G represents a gel content (wt%) based on a total weight of the graft copolymer, and Y represents an alkyl acrylate content (wt%) in a gel based on the total weight of the graft copolymer.

The method of preparing the thermoplastic resin composition shares all the technical characteristics of the above-described thermoplastic resin composition. Accordingly, repeated description thereof will be omitted.

The kneading and extruding may be performed at preferably 200 to 300 °C, more preferably 210 to 260 °C, still more preferably 220 to 250 °C using an extrusion kneader. Within this range, extrusion may be performed stably and kneading may be performed efficiently. At this time, the temperature is temperature set in a cylinder.

For example, the kneading and extruding may be performed at a screw rotation rate of 100 to 500 rpm, preferably 150 to 450 rpm, more preferably 200 to 400 rpm. In this case, due to appropriate throughput per unit time, process efficiency may be excellent.

For example, the thermoplastic resin composition obtained by extrusion may be prepared in pellets using a pelletizer.

Extrusion kneaders commonly used in the art to which the present invention pertains may be used without particular limitation, and a twin-screw extrusion kneader is preferably used.

**Molded article**

A molded article of the present invention includes the thermoplastic resin composition. In this case, mechanical properties, transparency, and weather resistance may be excellent. Due to excellent weather resistance, change over time may be reduced, color stability may be excellent, and an aesthetically pleasing appearance may be provided. In addition, the thermoplastic resin composition may be used to manufacture an injection-molded article, an extrusion-molded article, and a calendering-molded article.

The injection-molded article may preferably include automotive interior and exterior parts, parts for electrical and electronic products, unpainted molded articles, and metal insert molded products. As a specific example, the injection-molded article may be a bidet control panel, lawn robot housing, pool clean robot housing, a door accessory, or a window frame.

The extrusion-molded article may preferably be a film, a sheet, or foil. As a specific example, the extrusion-molded article may be a deco sheet, a finishing material for outdoor building materials, a finishing material for roofs, an interior film, wallpaper, an edge band, a vinyl-coated metal (VCM), a flooring material, plastic-steel-plastic (PSP) for molding, or a wrapping film.

The calendering-molded article may preferably be a film, a sheet, or foil. As a specific example, the calendering-molded article may be a deco sheet, a finishing material for outdoor building materials, a finishing material for roofs, an interior film, wallpaper, an edge band, a vinyl-coated metal (VCM), a flooring material, plastic-steel-plastic (PSP) for molding, or a wrapping film.

A method of manufacturing the molded article preferably includes a step of obtaining an extrudate by kneading and extruding, at 200 to 300 °C and 100 to 500 rpm, 100 parts by weight of a base resin including one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol and a step of manufacturing a molded article by molding the extrudate, wherein the graft copolymer (a-1) has an alkyl acrylate coverage (X) value of 65 % by weight or more as calculated by Equation 1 below. In this case, mechanical properties, transparency, and weather resistance may be excellent. Due to excellent weather resistance, change over time may be reduced, color stability may be excellent, and an aesthetically pleasing appearance may be provided. In addition, the molded article may be applicable to injection molding, extrusion molding, and calender molding.

$$[\text{Equation 1}]$$

$$X = \{(G-Y)/Y\} \times 100$$

In Equation 1, G represents a gel content (wt%) based on a total weight of the graft copolymer, and Y represents an alkyl acrylate content (wt%) in a gel based on the total weight of the graft copolymer.

For example, the extrudate may have a pellet shape or a plate shape.

In the present disclosure, the plate shape is not particularly limited as long as the plate shape is generally defined as a plate shape in the art to which the present invention pertains. For example, the plate shape may include a flat shape, a sheet shape, and a film shape.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

The materials used in Examples and Comparative Examples below are as follows.

[0151] * (a-1-1) ASA graft copolymer containing alkyl acrylate rubber having an average particle diameter of 50 to 120 nm: An ASA graft copolymer (core (rubber): 36 % by weight of butyl acrylate and 7 % by weight of styrene, shell: 4 % by weight of butyl acrylate, 39.5 % by weight of styrene, and 13.5 % by weight of acrylonitrile, alkyl acrylate coverage value: 99 % by weight, grafting degree: 77 %) prepared by emulsion polymerization and containing alkyl acrylate rubber having an average particle diameter of 70 nm

[0152] * (a-2) ASA graft copolymer containing alkyl acrylate rubber having an average particle diameter of 150 to 600 nm: An ASA graft copolymer (core (rubber): 50 % by weight of butyl acrylate, shell: 37.5 % by weight of styrene and 12.5 % by weight of acrylonitrile, grafting degree: 50 %) prepared by emulsion polymerization and containing alkyl acrylate rubber having an average particle diameter of 350 nm

[0153] * (a-3) ASA graft copolymer containing alkyl acrylate rubber having an average particle diameter of 80 nm or more and less than 150 nm: An ASA graft copolymer (core (rubber): 50 % by weight of butyl acrylate, shell: 37.5 % by weight of styrene and 12.5 % by weight of acrylonitrile, grafting degree: 35%) prepared by emulsion polymerization and containing alkyl acrylate rubber having an average particle diameter of 130 nm

[0154] * (a-1-2) ASA graft copolymer containing alkyl acrylate rubber having an average particle diameter of 50 to 120 nm: An ASA graft copolymer (core (rubber): 43 % by weight of butyl acrylate and 3 % by weight of styrene, shell: 4 % by weight of butyl acrylate, 37.5 % by weight of styrene, and 12.5 % by weight of acrylonitrile, alkyl acrylate coverage value: 77 % by weight, grafting degree: 65 %) prepared by emulsion polymerization and containing alkyl acrylate rubber having an average particle diameter of 65 nm

**[0155]** * (b-1) PMMA resin prepared by suspension polymerization: A polymethyl methacrylate resin (weight average molecular weight: 80,000 g/mol)

**[0156]** * (b-2) SAMMA resin prepared by bulk polymerization: A methyl methacrylate-styrene-acrylonitrile copolymer (weight average molecular weight: 95,000 g/mol) including 70 % by weight of methyl methacrylate, 22.5 % by weight of styrene, and 7.5 % by weight of acrylonitrile

**[0157]** * (C-1) UV234 (BASF Co.): A benzotriazole-based UV stabilizer (2-(2H-benzotriazole-2-yl)-4,6-bis(1-methyl-1-phenylethyl)phenol, molecular weight: 447.5 g/mol, melting point: 137 to 141 °C)

**[0158]** * (C-2) UV-P (BASF Co.): A benzotriazole-based UV stabilizer (molecular weight: 225 g/mol, melting point: 128 to 133 °C)

**[0159]** * (C-3) UV360 (BASF Co.): A benzotriazole-based UV stabilizer (molecular weight: 658.9 g/mol, melting point: 195 to 198 °C)

**[0160]** * (C-4) SONGSORB 7120 (Songwon Co.): A benzoate-based UV stabilizer (molecular weight: 438.6 g/mol, melting point: 197 °C)

**[0161]** * (C-5) SEESORB 105 (Shipro Kasei Kaisha Co.): A benzophenone-based UV stabilizer (molecular weight: 304.3 g/mol, melting point: 122 °C)

**[0162]** * (D-1) UV770 (BASF Co.): An NH-type HALS-based UV stabilizer (molecular weight: 480 g/mol, melting point: 82 to 85 °C)

**[0163]** * (D-2) Chimassorb994 (BASF Co.): An NH-type HALS-based UV stabilizer (molecular weight: 2000 to 3100 g/mol, melting point: 100 to 135 °C)

* Additives

- Heat stabilizer: Octadecyl-3-(3,5-di-t-butyl-4-hydroxyphenyl)-propionate
- Lubricant: Ethylene bis stearamide

Examples 1 to 11 and Comparative Examples 1 to 9

According to the contents shown in Tables 1 and 2, the components shown in Tables 1 and 2, 0.3 parts by weight of a heat stabilizer, and 0.3 parts by weight of a lubricant were fed into a twin-screw extruder. Then, melt-kneading and extrusion were performed at 230 °C and 150 rpm to prepare pellets. Then, the pellets were injected at a molding temperature of 220 °C using an injection machine to obtain a specimen for evaluating physical properties.

In addition, a sheet having a thickness of 0.15 mm was prepared at a temperature of 210 °C, an extrusion screw rotation rate of 150 rpm, a three-axis roll temperature of 80 °C, and a roll rotation rate of 1.5 m/min using the prepared pellets and a T-die extruder (ST32HS, twin screw, 32T, L/D = 44, Hankook E.M Co.), and the physical properties thereof were measured.

[Test Examples]

The properties of the pellets and specimens prepared in Examples 1 to 11 and Comparative Examples 1 to 9 were measured according to the following methods, and the results are shown in Tables 1 and 2 below.

**Measurement methods**

**[0168]** * Alkyl acrylate coverage value (X value, wt%) of graft copolymer (a-1): The alkyl acrylate coverage value of the graft copolymer (a-1) was calculated by Equation 1 below.

[Equation 1]

$$X = \{(G-Y)/Y\} \times 100$$

In Equation 1, G represents a gel content (wt%) based on a total weight of the graft copolymer, and Y represents an alkyl acrylate content (wt%) in a gel based on the total weight of the graft copolymer.

Here, the alkyl acrylate content in the gel was quantitatively calculated using an [1]NMR analyzer or FT-IR. Specific measurement conditions are as follows.

$^1$H NMR

- Equipment name: Bruker 600MHz NMR(AVANCE III HD) CPP BB(1H 19F tunable and broadband, with z-gradient) Prodigy Probe
- Measurement conditions: 1H NMR(zg30): ns=32, d1=5s, TCE-d2, at room temp.

FT-IR

- Equipment name: Agilent Cary 66
- Measurement conditions: ATR mode

* Gel content (%): 1 g of a graft copolymer was added to 30 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter was measured, and the gel content was calculated by Equation 2 below.

Gel content (wt%) = [Weight (g) of insoluble matter (gel)/Weight (g) of sample] × 100          [Equation 2]

* Grafting degree (%): 0.5 g of a powdered graft copolymer was added to 50 ml of acetone, agitation was performed at room temperature for 12 hours, centrifugation was performed to separate only insoluble matter that was not dissolved in acetone, and the separated insoluble matter was dried for 12 hours. Then, the weight of the dried insoluble matter was measured, and grafting degree was calculated by Equation 3 below.

Grafting degree (%) = [Weight (g) of grafted monomers/Rubber weight (g) × 100          [Equation 3]

In Equation 3, the weight (g) of grafted monomers is obtained by subtracting rubber weight (g) from the weight (g) of insoluble matter (gel) obtained by dissolving the graft copolymer in acetone and performing centrifugation, and the rubber weight (g) is the weight (g) of rubber components theoretically added to graft copolymer powder.

As a specific measurement example, when measuring the weight (g) of insoluble matter (gel), 0.5 g of a powdered graft copolymer was added to 50 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter (gel) was measured.

[0175]   * Haze (%): The haze of a sheet having a thickness of 0.15 mm was measured according to ASTM D1003.

[0176]   * Total light transmittance (%): The total light transmittance of a sheet having a thickness of 0.15 mm was measured according to ASTM D1003.

[0177]   * Change over time (ΔE): After leaving an injection specimen having a thickness of 3 mm in a weatherometer for 4,000 hours or 8,000 hours according to ASTM G155-1, for each case, the degree of discoloration was measured using a color difference meter, and change over time (ΔE) was calculated by Equation 4 below.

[Equation 4]

$$\Delta E = \sqrt{(L'-L_0)^2 + (a'-a_0)^2 + (b'-b_0)^2}$$

[0178] In Equation 4, L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

[0179] * Whitening resistance: A sheet having dimensions of 10 cm $\times$ 10 cm $\times$ 0.15 mm in width, length, and thickness was folded in a machined direction (MD) and a traverse direction (TD) by hand, and occurrence of whitening on the bent surface was observed with the naked eye. Then, whitening resistance was evaluated based on the following criteria.

o: No whitening occurs.
Δ: Slight whitening occurs.
X: Excessive whitening occurs.

[0180] * Tensile strength (kgf/cm$^2$) and elongation (%): For each of the machine direction (MD) and transverse direction (TD) of a sheet having a thickness of 0.15 mm, tensile strength and elongation were measured at a tensile rate of 10 mm/min according to ASTM D412.

[0181] * Tear strength (kgf/cm) : For each of the machine direction (MD) and transverse direction (TD) of a sheet having a thickness of 0.15 mm, tear strength was measured at a tensile rate of 10 mm/min according to ASTM D624.

[Table 1]

| Classificati on | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| (a-1-1) ASA | 70 | 60 | 70 | 70 | 70 | | | | | 70 | 70 |
| (a-2) ASA | | | | | | 25 | | 15 | | | |
| (a-3) ASAS | | | | | | | 60 | 15 | | | |
| (a-1-2) ASA | | | | | | | | | 70 | | |
| (b-1) PMMA | 30 | 30 | 30 | 30 | 30 | 75 | 40 | 35 | 30 | 30 | 30 |
| (b-2) SAMMA | | 10 | | | | | | 35 | | | |
| (C-1) UV234 | 1.5 | 2.0 | 1 | 2.5 | 1.5 | 1.5 | 1.5 | 1.5 | 1.5 | | |
| (C-4) SONGSORB 7120 | | | | | | | | | | 1.5 | |
| (C-5) SEESORB 105 | | | | | | | | | | | 1.5 |
| (D-1) UV770 | 1.0 | 0.7 | 0.7 | 0.7 | 1.5 | 1.0 | 1.0 | 1.0 | 1.0 | 1.0 | 1.0 |
| (a-1) X value (wt%) of ASA | 99 | 99 | 99 | 99 | 99 | - | - | - | 77 | 99 | 99 |
| (a-1) Grafting degree (%) of ASA | 77 | 77 | 77 | 77 | 77 | - | - | - | 65 | 77 | 77 |
| Physical properties | | | | | | | | | | | |
| Total light transmittanc e (%) | 91. 4 | 90. 9 | 91. 4 | 91. 1 | 91. 2 | 86. 7 | 88. 8 | 84. 3 | 89. 8 | 90. 9 | 89. 2 |
| Haze (%) | 5.6 | 4.2 | 5.0 | 5.8 | 5.5 | 7.5 | 6.2 | 9.7 | 7.8 | 4.7 | 8.1 |
| Whitening resistance | ○ | ○ | ○ | ○ | ○ | X | X | X | Δ | ○ | ○ |
| Change over time (ΔE) after 4,000 hr | 1.0 7 | 0.9 8 | 1.2 5 | 1.2 1 | 0.9 8 | 0.9 3 | 1.2 8 | 1.4 6 | 1.1 7 | 1.9 2 | 1.7 0 |

(continued)

| Physical properties | | | | | | | | | | | |
|---|---|---|---|---|---|---|---|---|---|---|---|
| Change over time (ΔE) after 8,000 hr | 1.79 | 1.56 | 2.57 | 2.41 | 1.52 | 1.18 | 2.01 | 2.64 | 1.93 | 2.69 | 2.51 |
| Tensile strength (MD, kgf/cm²) | 305 | 327 | 311 | 301 | 312 | 552 | 323 | 448 | 346 | 304 | 308 |
| Elongation (MD, %) | 70 | 46 | 68 | 72 | 69 | 10 | 32 | 15 | 44 | 72 | 65 |
| Tear strength (MD, kgf/cm) | 82 | 76 | 73 | 69 | 82 | 122 | 73 | 101 | 83 | 79 | 82 |
| Tensile strength (TD, kgf/cm²) | 250 | 259 | 249 | 245 | 248 | 483 | 267 | 396 | 236 | 250 | 248 |
| Elongation (TD, %) | 62 | 44 | 64 | 63 | 65 | 16 | 23 | 14 | 43 | 67 | 59 |
| Tear strength (TD, kgf/cm) | 66 | 66 | 64 | 65 | 67 | 80 | 58 | 90 | 76 | 68 | 65 |

[Table 2]

| Classification | Comparative Examples | | | | | | | | |
|---|---|---|---|---|---|---|---|---|---|
| | 1 | 2 | 3 | 4 | 5 | 6 | 7 | 8 | 9 |
| (a-1-1) ASA | 70 | 70 | 70 | 70 | 70 | 70 | 70 | 70 | 70 |
| (a-2) ASA | | | | | | | | | |
| (a-3) ASA | | | | | | | | | |
| (a-1-2) ASA | | | | | | | | | |
| (b-1) PMMA | 30 | 30 | 30 | 30 | 30 | 30 | 30 | 30 | 30 |
| (b-2) SAMMA | | | | | | | | | |
| (C-1) UV234 | 2.5 | 1.5 | 1.5 | | | 4.5 | 0.1 | 1.5 | 1.5 |
| (C-2) UV-P | | | | 1.5 | | | | | |
| (C-3) UV360 | | | | | 1.5 | | | | |
| (D-1) UV770 | | | 0.5 | 1.0 | 1.0 | 1.0 | 1.0 | 3.0 | 0.1 |
| (D-2) Chimassorb994 | | 1.0 | 0.5 | | | | | | |
| (a-1) X value (wt%) of ASA | 99 | 99 | 99 | 99 | 99 | 99 | 99 | 99 | 99 |
| (a-1) Grafting degree (%) of ASA | 77 | 77 | 77 | 77 | 77 | 77 | 77 | 77 | 77 |
| Physical properties | | | | | | | | | |
| Total light transmittance (%) | 91.5 | 91.3 | 91.3 | 91.3 | 91.2 | 85.4 | 91.3 | 86.7 | 91.5 |
| Haze (%) | 5.5 | 3.3 | 3.4 | 3.2 | 3.7 | 12.7 | 5.5 | 11.3 | 5.3 |
| Whitening resistance | ○ | ○ | ○ | ○ | ○ | ○ | ○ | ○ | ○ |
| Change over time (ΔE) after 4,000 hr | 0.90 | 4.21 | 3.22 | 3.08 | 4.06 | 3.78 | 4.47 | 2.25 | 1.59 |
| Change over time (ΔE) after 8,000 hr | 6.73 | 6.78 | 4.87 | 4.69 | 6.42 | 4.51 | 6.55 | 4.19 | 6.02 |
| Tensile strength (MD, kgf/cm²) | 299 | 257 | 300 | 300 | 302 | 301 | 309 | 293 | 298 |
| Elongation (MD, %) | 65 | 59 | 69 | 70 | 69 | 72 | 60 | 73 | 66 |
| Tear strength (MD, kgf/cm) | 62 | 75 | 70 | 70 | 73 | 73 | 75 | 70 | 79 |
| Tensile strength (TD, kgf/cm²) | 238 | 215 | 245 | 240 | 242 | 244 | 241 | 235 | 240 |

(continued)

| Physical properties | | | | | | | | | |
|---|---|---|---|---|---|---|---|---|---|
| Elongation (TD, %) | 52 | 49 | 65 | 63 | 66 | 68 | 63 | 68 | 59 |
| Tear strength (TD, kgf/cm) | 63 | 63 | 62 | 63 | 57 | 69 | 67 | 62 | 62 |

In Tables 1 and 2, the content of each of (a-1-1), (a-2), (a-3), (a-1-2), (b-1), and (b-2) is given in % by weight based on a total weight of (a-1-1), (a-2), (a-3), (a-1-2), (b-1), and (b-2), and the content of each of (C-1), (C-2), (C-3), (C-4), (C-5), (D-1), and (D-2) is given in parts by weight based on 100 parts by weight in total of (a-1-1), (a-2), (a-3), (a-1-2), (b-1), and (b-2).

As shown in Tables 1 and 2, the thermoplastic resin compositions of Examples 1 to 11 according to the present invention exhibited total light transmittance and haze equal or superior to those of the thermoplastic resin compositions of Comparative Examples 1 to 9 outside of the range of the present invention. In addition, in the case of Examples 1 to 11, after being left for 4,000 hours, change over time (△E) was reduced. In particular, after being left for 8,000 hours, change over time (△E) was reduced. These results indicated that color stability was excellent. In addition, the thermoplastic resin compositions of Examples 1 to 11 exhibited tensile strength, elongation, and tear strength similar or equal to those of the thermoplastic resin compositions of Comparative Examples 1 to 9. Here, in the case of Examples 1 to 5 and Examples 10 and 11 including the ASA graft copolymer (a-1-1) and Example 9 including the ASA graft copolymer (a-1-2), occurrence of whitening was reduced during bending processing. In addition, in the case of Examples 1 to 9 including the benzotriazole-based UV stabilizer (C-1), the change over time (△E) measured after being left for 4,000 hours was less than the change over time (△E) measured after being left for 8,000 hours.

Specifically, in the case of Comparative Example 1 not including the UV770 (D-1), after being left for 8,000 hours, change over time (△E) was increased. In the case of Comparative Example 2 including the Chimassorb994 (D-2) instead of the UV770 (D-1), Comparative Example 3 including the Chimassorb994 (D-2) and a small amount of the UV770 (D-1), and Comparative Examples 4 and 5 including the UV-P (C-2) and the UV360 (C-3) instead of the UV234 (C-1), respectively, after being left for 4,000 hours and 8,000 hours, change over time (△E) was poor.

In addition, in the case of Comparative Examples 6 and 7 including the UV234 (C-1) in an amount outside the range of the present invention, after being left for 4,000 hours and 8,000 hours, change over time (△E) was poor. In addition, in the case of Comparative Example 6, haze was also poor, and deposits were formed at a die entrance and sheet during sheet processing.

In addition, in the case of Comparative Example 8 including an excess of the UV770 (D-1), haze was poor, and change over time (△E) was poor after being left for 4,000 hours and 8,000 hours. In addition, during sheet processing, deposits were formed at a die entrance and sheet. In the case of Comparative Example 9 including a small amount of the UV770 (D-1), after being left for 8,000 hours, change over time (△E) was increased.

In conclusion, when a thermoplastic resin composition was prepared by including a base resin including one or more of three types of alkyl acrylate-aromatic vinyl compound-vinyl cyanide compound graft copolymers each containing rubber having a predetermined average particle diameter and one or more of a (meth)acrylic acid alkyl ester polymer and a (meth)acrylic acid alkyl ester compound-aromatic vinyl compound-vinyl cyanide compound copolymer; one or more stabilizers having a predetermined molecular weight and selected from the group consisting of a benzotriazole-based UV stabilizer, a benzoate-based UV stabilizer, and a benzophenone-based UV stabilizer; and an NH-type HALS-based UV stabilizer in a predetermined content ratio, mechanical properties, transparency, and weather resistance were excellent, and due to excellent weather resistance, change over time was reduced, thereby improving color stability and providing an aesthetically pleasing appearance. In addition, when the alkyl acrylate coverage value of the alkyl acrylate-aromatic vinyl compound-vinyl cyanide compound graft copolymer was adjusted in a predetermined range, occurrence of whitening was reduced during bending processing.

## Claims

1. A thermoplastic resin composition, comprising:

   100 parts by weight of a base resin comprising one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm, and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2);

0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and

greater than 0.6 parts by weight and 2 parts by weight or less of an NH-type HALS-based UV stabilizer (D) having a molecular weight of 300 to 700 g/mol,

wherein the graft copolymer (a-1) has an alkyl acrylate coverage (X) value of 65 % by weight or more as calculated by Equation 1 below.

[Equation 1]

$$X = \{(G-Y)/Y\} \times 100,$$

wherein G represents a gel content (wt%) based on a total weight of the graft copolymer, and Y represents an alkyl acrylate content (wt%) in a gel based on the total weight of the graft copolymer.

2. The thermoplastic resin composition according to claim 1, wherein the one or more (C) selected from the group consisting of a benzotriazole-based UV stabilizer, a benzoate-based UV stabilizer, and a benzophenone-based UV stabilizer have a melting point of 100 to 200 °C.

3. The thermoplastic resin composition according to claim 1, wherein the benzotriazole-based UV stabilizer comprises one or more selected from the group consisting of 2-(2H-benzotriazole-2-yl)-4,6-bis(1-methyl-1-phenylethyl)phenol (UV234) and 2-[2-hydroxy-3-dimethylbenzylphenyl-5-(1,1,3,3-tetramethylbutyl)]-2H-benzotriazole.

4. The thermoplastic resin composition according to claim 1, wherein the benzoate-based UV stabilizer is 2,4-di-tert-butylphenyl 3,5-di-tert-butyl-4-hydroxybenzoate, hexadecyl 3,5-di-tert-butyl-4-hydroxybenzoate, or a mixture thereof.

5. The thermoplastic resin composition according to claim 1, wherein the benzophenone-based UV stabilizer comprises one or more selected from the group consisting of 2-hydroxy-4-octoxybenzophenone, 4-benzyloxy-2-hydroxybenzophenone, 2-hydroxy-4-methoxybenzophenone-5-sulfonic acid, 2,2'-dihydroxy-4,4'-dimethoxybenzophenone-5,5'-disulfonic acid, and 2,2'-dihydroxy-4,4'-dimethoxybenzophenone-5,5'-disulfonic acid disodium salt.

6. The thermoplastic resin composition according to claim 1, wherein the NH-type HALS-based UV stabilizer (D) has a melting point of 60 to 120 °C.

7. The thermoplastic resin composition according to claim 1, wherein the NH-type HALS-based UV stabilizer (D) comprises one or more selected from the group consisting of bis(2,2,6,6-tetramethyl-4-piperidyl)sebacate and bis(1,2,2,6,6-pentamethyl-4-piperidyl)sebacate.

8. The thermoplastic resin composition according to claim 1, wherein, based on a total weight of the graft copolymer (a-1), the graft copolymer (a-1) comprises 20 to 60 % by weight of alkyl acrylate rubber and 40 to 80 % by weight of an aromatic vinyl compound-vinyl cyanide compound copolymer surrounding the alkyl acrylate rubber.

9. The thermoplastic resin composition according to claim 1, wherein, based on a total weight of the base resin, a total weight of the graft copolymer (a-1), the graft copolymer (a-2), and the graft copolymer (a-3) is 15 to 80 % by weight.

10. The thermoplastic resin composition according to claim 1, wherein, based on a total weight of the base resin, a total weight of the polymer (b-1) and the polymer (b-2) is 20 to 85 % by weight.

11. The thermoplastic resin composition according to claim 1, wherein the (meth)acrylic acid alkyl ester polymer (b-1) comprises one or more selected from the group consisting of (meth)acrylic acid methyl ester, (meth)acrylic acid ethyl ester, (meth)acrylic acid propyl ester, (meth)acrylic acid 2-ethyl hexyl ester, (meth)acrylic acid decyl ester, and (meth)acrylic acid lauryl ester.

**12.** The thermoplastic resin composition according to claim 1, wherein the polymer (b-2) comprises 60 to 85 % by weight of an alkyl (meth)acrylate, 10 to 35 % by weight of an aromatic vinyl compound, and 1 to 20 % by weight of a vinyl cyanide compound.

**13.** The thermoplastic resin composition according to claim 1, wherein the polymer (b-1) and the polymer (b-2) each have a weight average molecular weight of 50,000 to 150,000 g/mol.

**14.** The thermoplastic resin composition according to claim 1, wherein, after an injection specimen having a thickness of 3 mm is left in a weatherometer for 8,000 hours according to ASTM G155-1, when a degree of discoloration is measured using a color difference meter and change over time ($\Delta E$) is calculated by Equation 4 below, the thermoplastic resin composition has a change over time ($\Delta E$) of 3 or less.

[Equation 4]

$$\Delta E = \sqrt{(L'-L_0)^2 + (a'-a_0)^2 + (b'-b_0)^2}$$ ,

wherein L', a', and b' represent L, a, and b values measured using a CIE LAB color coordinate system after leaving a specimen, respectively, and $L_0$, $a_0$, and $b_0$ represent L, a, and b values measured using the CIE LAB color coordinate system before leaving the specimen, respectively.

**15.** A method of preparing a thermoplastic resin composition, comprising kneading and extruding, at 200 to 300 °C and 100 to 500 rpm, 100 parts by weight of a base resin comprising one or more (A) selected from the group consisting of an alkyl acrylate-aromatic vinyl compound-vinyl cyanide compound graft copolymer (a-1) containing alkyl acrylate rubber having an average particle diameter of 50 to 120 nm, an alkyl acrylate-aromatic vinyl compound-vinyl cyanide compound graft copolymer (a-2) containing alkyl acrylate rubber having an average particle diameter of 150 to 600 nm, and an alkyl acrylate-aromatic vinyl compound-vinyl cyanide compound graft copolymer (a-3) containing alkyl acrylate rubber having an average particle diameter of 80 nm or more and less than 150 nm, and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); 0.5 to 3.5 parts by weight of one or more (C) having a molecular weight of 280 to 600 g/mol and selected from the group consisting of a benzotriazole-based UV stabilizer, a benzoate-based UV stabilizer, and a benzophenone-based UV stabilizer; and greater than 0.6 parts by weight and 2 parts by weight or less of an NH-type HALS-based UV stabilizer (D) having a molecular weight of 300 to 700 g/mol,

wherein the graft copolymer (a-1) has an alkyl acrylate coverage (X) value of 65 % by weight or more as calculated by Equation 1 below.

[Equation 1]

X = {(G-Y)/Y} × 100,

wherein G represents a gel content (wt%) based on a total weight of the graft copolymer, and Y represents an alkyl acrylate content (wt%) in a gel based on the total weight of the graft copolymer.

**16.** A molded article, comprising the thermoplastic resin composition according to any one of claims 1 to 14.

## INTERNATIONAL SEARCH REPORT

| International application No. |
| --- |
| **PCT/KR2023/012324** |

**A.      CLASSIFICATION OF SUBJECT MATTER**

**C08L 51/04**(2006.01)i; **C08L 33/06**(2006.01)i; **C08K 5/3475**(2006.01)i; **C08L 25/08**(2006.01)i; **C08K 5/3435**(2006.01)i

According to International Patent Classification (IPC) or to both national classification and IPC

**B.      FIELDS SEARCHED**

Minimum documentation searched (classification system followed by classification symbols)

C08L 51/04(2006.01); B32B 27/08(2006.01); B32B 27/18(2006.01); C08F 265/06(2006.01); C08J 5/18(2006.01); C08L 33/12(2006.01); C08L 51/00(2006.01); C08L 55/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알킬 아크릴레이트-방향족 비닐 화합물-비닐시안 화합물 그라프트 공중합체 (alkyl acrylate-aromatic vinyl compound-vinyl cyan compound graft copolymer), (메트)아크릴산 알킬 에스테르 중합체 ((meth)acrylic acid alkyl ester polymer), (메트)아크릴산 알킬 에스테르 화합물-방향족 비닐 화합물 -비닐시안화합물 공중합체((meth)acrylic acid alkyl ester compound-aromatic vinyl compound-vinyl cyan compound copolymer), 자외선 안정제(UV stabilizer), 열가소성(thermoplastic)

**C.      DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0106409 A (LG CHEM, LTD.) 29 July 2022 (2022-07-29)<br>See claims 1-14; paragraphs [0085]-[0217]; and table 1. | 1-3,6-16 |
| Y | | 4-5 |
| Y | KR 10-2019-0006027 A (SUMITOMO CHEMICAL CO., LTD.) 16 January 2019 (2019-01-16)<br>See claims 1-2; and paragraphs [0091]-[0093]. | 4-5 |
| A | KR 10-2008-0020994 A (TECHNO POLYMER CO., LTD.) 06 March 2008 (2008-03-06)<br>See entire document. | 1-16 |
| A | KR 10-2009-0073702 A (CHEIL INDUSTRIES INC.) 03 July 2009 (2009-07-03)<br>See entire document. | 1-16 |

| ✓ Further documents are listed in the continuation of Box C. | ✓ See patent family annex. |
| --- | --- |

\*      Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **20 November 2023** | **21 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/012324**

| C. | DOCUMENTS CONSIDERED TO BE RELEVANT | |
|---|---|---|
| Category* | Citation of document, with indication, where appropriate, of the relevant passages | Relevant to claim No. |
| A | JP 2006-056961 A (NIPPON A & L KK) 02 March 2006 (2006-03-02)<br>　　　See entire document. | 1-16 |

**INTERNATIONAL SEARCH REPORT**
Information on patent family members

International application No.

**PCT/KR2023/012324**

| Patent document cited in search report | | | Publication date (day/month/year) | Patent family member(s) | | | Publication date (day/month/year) |
|---|---|---|---|---|---|---|---|
| KR | 10-2022-0106409 | A | 29 July 2022 | CN | 115119513 | A | 27 September 2022 |
| | | | | EP | 4074779 | A1 | 19 October 2022 |
| | | | | EP | 4074779 | A4 | 02 August 2023 |
| | | | | JP | 2023-514020 | A | 05 April 2023 |
| | | | | JP | 7342276 | B2 | 11 September 2023 |
| | | | | US | 2023-0235161 | A1 | 27 July 2023 |
| | | | | WO | 2022-158720 | A1 | 28 July 2022 |
| KR | 10-2019-0006027 | A | 16 January 2019 | CN | 109070567 | A | 21 December 2018 |
| | | | | CN | 109070567 | B | 01 October 2019 |
| | | | | JP | 2017-213726 | A | 07 December 2017 |
| | | | | JP | 6407918 | B2 | 17 October 2018 |
| | | | | KR | 10-2008477 | B1 | 07 August 2019 |
| | | | | WO | 2017-208883 | A1 | 07 December 2017 |
| KR | 10-2008-0020994 | A | 06 March 2008 | CN | 101163740 | A | 16 April 2008 |
| | | | | CN | 101163740 | B | 20 July 2011 |
| | | | | JP | 2006-335960 | A | 14 December 2006 |
| | | | | JP | 2007-277381 | A | 25 October 2007 |
| | | | | JP | 2007-291327 | A | 08 November 2007 |
| | | | | US | 2010-0016507 | A1 | 21 January 2010 |
| | | | | WO | 2006-129769 | A1 | 07 December 2006 |
| KR | 10-2009-0073702 | A | 03 July 2009 | KR | 10-0920807 | B1 | 08 October 2009 |
| JP | 2006-056961 | A | 02 March 2006 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220135356
- KR 1020230108416

- KR 20090095764 A